# EUROPEAN PATENT SPECIFICATION

(11) **EP 0 383 548 B1**
(45) Date of publication and mention of the grant of the patent: **18.05.1994**
(21) Application number: 90301525.3
(22) Date of filing: 13.02.1990
(51) Int. Cl.: B65G 47/38

(54) **Mechanism for reversing carrier**
Mechanismus zum Wenden von Lastträgern
Mécanisme pour tourner des portes-charges

(30) Priority: 14.02.1989 JP 34078/89
(43) Date of publication of application: 22.08.1990
(73) Proprietor: Yoshino Kogyosho Co., Ltd., Tokyo 136 (JP)
(72) Inventor: Oshida, Mamoru, Koto-ku, Tokyo (JP); Oizumi, Masaru, Koto-ku, Tokyo (JP); Ichizawa, Yoshiyuki, Koto-ku, Tokyo (JP)
(74) Representative: Crouch, David John

(56) References cited:
- EP-A- 0 212 858
- DE-C- 145 551
- DE-C- 1 116 156
- FR-A- 549 170
- US-A- 1 498 198
- US-A- 4 750 606

## Description

### Background of the invention

### Field of the invention

The present invention relates to a mechanism for reversing a carrier of transfer means having many carriers which are connected to an endless chain and transferred along a loop track, said mechanism comprising first engagement means secured to the carrier and second engagement means fixed relative to the track in which the first and second engagement means engage one another when the mechanism is in use to effect such reversal.

### Prior art

Hitherto, in a conveyance apparatus comprising a plurality of barrel shaped carriers, each of which having a bottom such as a bucket or the like for receiving an article to be transferred and one or two endless chains connected to the carriers and arranged to travel along a loop track, it has been known that as means for taking the article out of the carrier, in general the endless chain connected to the carriers is arranged so as to travel along a loop track in a vertical plane to provide an upper portion in which the carriers progress in a normal posture and a lower portion in which the carriers return in an inverted posture thereby to cause the articles in the carriers to drop out of the carriers by their own weight at the lower portion of the endless chain.

Moreover, there have been well known different arrangements for taking the article in the carrier out by use of an additional grasping device.

However, the conventional arrangements for dropping the article out of the carrier connected to the endless chain by reversing the carrier is limited to the case of an endless chain, the carriers and the articles in the carriers travelling along the loop track in a vertical plane, and can not apply to the case of travel in a horizontal plane.

Furthermore, the arrangement for taking the article out by use of the additional grasping device requires high cost of equipment and is expensive.

One mechanism which may be used to overcome this problem and which is in accordance with the opening paragraph of the present specification is disclosed in US-A-4,750,606. This describes an apparatus for tipping a bucket carried by a conveyor chain around a circuit to empty the contents thereof at a predetermined location. The apparatus is characterised by providing a dwell time to the bucket in its inverted position as the bucket is rotated 360 degrees around a fixed pivot degrees to permit complete emptying of the buckets. The apparatus comprises a sprocket mounted concentric with the pivot about which the bucket rotates and fixed for rotation with the bucket. The sprocket has a plurality of radially outwardly extending uniformly spaced-apart projections and at least one space on the sprocket defined by the absence of a projection. All elongate rack is positioned adjacent the chain at the bucket tipping position and has sprocket engaging portions thereon positioned in engaging alignment with the projections of the sprocket as the bucket passes, thereby to arrest rotation of the bucket while the bucket is in its inverted position to permit the contents to empty entirely.

However, a certain degree of difficulty is encountered in such a construction to ensure correct interengagement between the parts which effect reversal of the carrier, and the construction is relatively expensive to make.

### Summary of the Invention

It is an aim of the present invention to provide a reversal mechanism adapted for easily and economically taking an article out of a carrier irrespective of whether the loop track extends in a horizontal or a vertical plane.

Accordingly, the present invention is directed to a mechanism as set out in the opening paragraph of the present specification, in which :
(a) the first engagement means comprise a body which includes a plate member fixed to such a carrier and four reversing elements rotatably supported on the plate member at positions spaced from each other by equal distances in the circumferential direction; and
(b) the second engagement means comprise at least one reversing cam including at least one projection formed on a track rail on which the reversing elements of the body roll to guide the reversing elements so as to reverse the body and grooves formed in the track rail at the front and rear sides of the projection.

Preferably, the track rail is provided with two reversing cams.

### Brief description of the Drawings

An example of a mechanism made in accordance with the present invention will now be described with reference to the accompanying drawings, in which :
Figure 1 shows a schematic elevational view of the mechanism; and
Figure 2 is a diagrammatic view illustrating the motion of a reversal body of the mechanism shown in Figure 1.

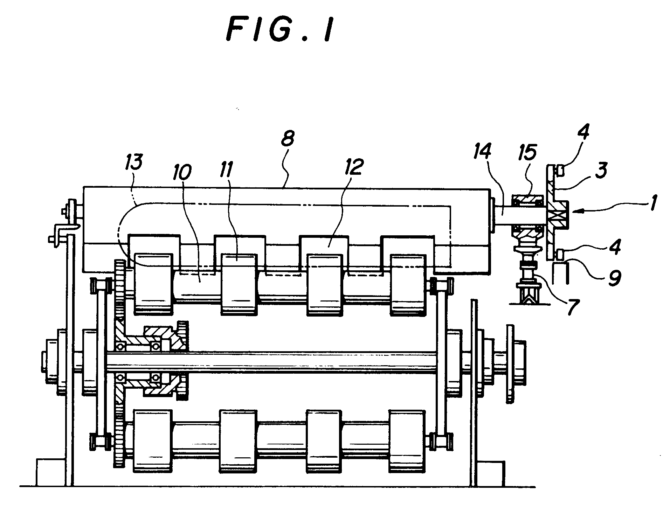

With reference to Figure 1, a mechanism for reversing or inverting a carrier comprises a reversing body 1 and a reversing cam 2.

The body 1 includes a plate member 3 fixed to a barrel-shaped carrier 8 such as a bucket connected to an endless chain, and four reversing elements 4 which are rotatably supported on the plate member 3 at positions which are spaced from each other by equal distances in a circumferential direction.

The reversing cam 2 includes a projection 5 formed on a track rail 9 on which the reversing elements 4 of the body 1 roll to guide the reversing elements 4 so as to reverse the body 1, and grooves 6 formed in the track rail at the front and rear sides of the projection 5.

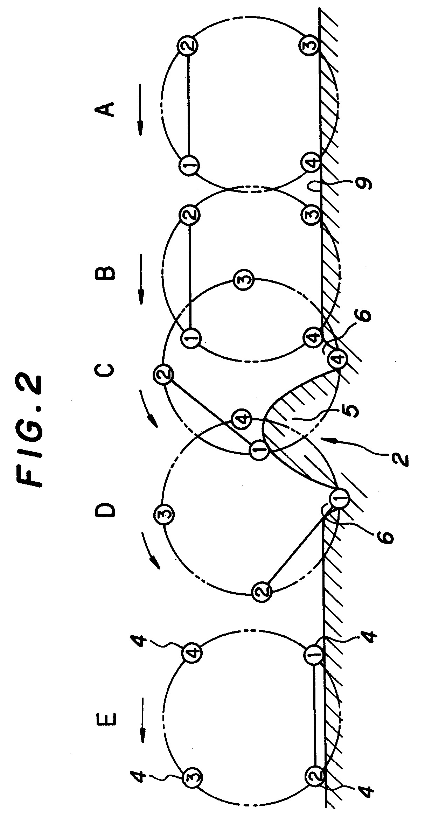

With reference to Figure 2, at position "A", the body 1 travels with two reversing elements 4 (a third reversing element 4-3 and a fourth reversing element 4-4) rolling on the rail 9. At this time, the bucket or carrier 8 fixed with the body 1 maintain the normal posture with the top opening being upwardly directed and the article 13 to be transferred being contained in the carrier 8. The top opening of the carrier is shown by a straight line connecting two reversing elements 4 in Figure 2. For example, at position "A", the straight line connecting the first reversing element 4-1 and the second reversing element 4-2.

When the body 1 reaches position "B" as the carrier maintains the normal posture, the fourth reversing element 4-4 drops in the groove 6 to abut against the projection 5 (position "C"). The carrier 8 further progresses, and then the body 1 begins to rotate in a counter-clockwise sense about the fourth reversing element 4-4 until the first reversing element 4-1 abuts against the projection 5.

After the first reversing element 4-1 abuts against the projection 5, the carrier 8 further progresses and then the fourth reversing element 4-4 leaves the groove 6 and travels along the projection 5. At this time, the first reversing element 4-1 also travels along the projection 5 and then the body 1 continues its reversal movement. When the first reversing element 4-1 drops in the groove 6, the body 1 begins to rotate about the first reversing element 4-1 and then further rotates in the counter-clockwise sense (position "D"). This reversal movement continues until the second reversing element 4-2 contacts the surface of the rail 9 and after the second reversing element contacts the surface of the rail 7, the body 1 progresses as the first reversing element 4-1 and the second reversing element 4-2 roll on the rail (position "E"). At this time, the posture of the body 1 is a reversed posture rotated from the original posture of the body 1 (position "A") and therefore the posture of the carrier 8 is also a reversed posture and the top opening of the carrier is directed downwardly.

Consequently, the article 13 automatically drops out of the carrier 8 by its own weight and is taken out of the carrier 8.

A further reversing cam may be provided on the rail 9 to reverse the reversed body 1, thereby returning the reversed carrier 8 to the normal posture.

Figure 1 actually illustrates a portion of an electron beam irradiating conveyance apparatus for irradiating an electron beam to an article to be transferred such as a preform of a container of synthetic resin to remove monomer which adversely affects the contents of the container.

The conveyance apparatus actually comprises a plurality of carriers 8 such as buckets which are equi-spaced from each other, and are connected to an endless chain 7 which travels along a loop track in a horizontal plane. A plurality of rollers 10 are arranged directly under the carriers with a plurality of widened sections 11 which protrude into the carrier 8 through bottom openings 12 to drivingly contact the article to be transferred to thereby rotate the article in the carrier by the rollers which are rotated and travel at the same speed and the same direction as those of the carriers 8 and an electron beam accelerator (not shown) arranged directly above the carriers 8 and coupled to the rollers 10. Thus, the articles to be transferred are uniformly irradiated with the electron beam by transferring the articles by means of the carriers 8 and rotating the articles by means of the rollers 10. The irradiating conveyance apparatus may be as described in EP-A-0 383 537. However, the illustrated apparatus is not limited to such an application.

It will be appreciated that the reversing body 1 is fixed to an outer end of a fixed shaft 14 extended from one end of the carrier 8. The fixed shaft 14 is rotatably supported by means of a bearing 15. The apparatus also comprises two reversing cams 2. These reversing cams 2 may be sequentially provided on a track rail 9 at the downstream side of the electron beam irradiation area.

Thus, firstly, the preforms are received in and transferred by the carrier 8 on its normal posture. After passing the electron beam irradiation area, the carrier 8 is reversed by the first reversing cam 2 to drop the preform out of the carrier 8 by its own weight. Then the inverted carrier 8 is again reversed by the second reversing cam to return the original normal posture for receiving a new preform. The aforementioned process is repeated.

In this embodiment, the reversing cam 2 is formed on the rail 9 positioned under the body 1 (under the third and fourth reversing elements at position "A" in Figure 2), but the reversing cam 2 may be formed on a rail positioned above the body 1 (above the first and second reversing elements at position "A" in Figure 2). In such a case, the projections 5 of course protrude downwardly from the surface of the rail 9.

Thus, the article in the carrier can be easily taken out by simply fixing the body to the carrier and providing a reversing cam on the rail and a reversing element on the body so as to reverse the carrier to an inverted posture and therefore the article can be easily taken out of the carrier which travels along a loop track in the horizontal plane.

Furthermore, any special device for taking the article out of the carrier is not required, so that the construction is simple and economical.

## Claims

1. A mechanism for reversing a carrier (8) of transfer means having many carriers which are connected to an endless chain (7) and transferred along a loop track (9), said mechanism comprising first engagement means secured to the carrier and second engagement means fixed relative to the track in which the first and second engagement means engage one another when the mechanism is in use to effect such reversal, characterised in that :
(a) the first engagement means comprise a body (1) which includes a plate member (3) fixed to such a carrier (8) and four reversing elements (4) rotatably supported on the plate member (3) at positions spaced from each other by equal distances in the circumferential direction; and
(b) the second engagement means comprise at least one reversing cam (2) including at least one projection (5) formed on a track rail (9) on which the reversing elements (4) of the body (1) roll to guide the reversing elements (4) so as to reverse the body (1) and grooves (6) formed in the track rail (9) at the front and rear sides of the projection (5).

2. A mechanism according to claim 1, characterised in that the track rail (9) is provided with two reversing cams.

## Patentansprüche

1. Vorrichtung zum Wenden eines Lastenträgers (8) einer Transportvorrichtung, die ihrerseits viele Lastenträger hat, die mit einer endlosen Kette (7) verbunden sind und längs einer Schienenschleife (9) gefördert werden, wobei die Vorrichtung eine erste Eingriffsvorrichtung umfaßt, die mit dem Lastenträger verbunden ist sowie eine zweite Eingriffsvorrichtung, die relativ zur Schiene befestigt ist, an der die erste und zweite Eingriffsvorrichtung dann miteinander in Eingriff stehen, wenn die Vorrichtung dazu benutzt wird, einen solchen Wendevorgang zu bewirken,
dadurch **gekennzeichnet,** daß
a) die erste Eingriffsvorrichtung einen Wendekörper (1) umfaßt, der aus einem Plattenteil (3) besteht, der an einem Lastenträger (8) befestigt ist sowie aus vier Wendeelemente (4), die drehbar am Plattenteil (3) an Stellen gelagert sind, die in Umfangsrichtung in gleichen Abständen voneinander angeordnet sind; und daß
b) die zweite Eingriffsvorrichtung wenigstens eine Wendekurve (2) umfaßt, die ihrerseits aus wenigstens einem Vorsprung (5) besteht, der auf derjenigen Schiene (9) befestigt ist, auf der die Wendeelemente (4) des Wendekörpers (1) abrollen, wobei die Wendeelemente (4) so geführt sind, daß sie den Wendekörper (1) wenden sowie aus Nuten oder Vertiefungen (6), die in der Schiene (9) auf der Vorder- und Rückseite des Vorsprunges (5) ausgebildet sind.

2. Vorrichtung nach Anspruch 1, dadurch gekennzeichnet, daß die Schiene (9) mit zwei Wendekurven versehen ist.

## Revendications

1. Mécanisme de retournement d'un support (8) de moyens de transfert comprenant de nombreux supports qui sont reliés à une chaîne sans fin (7) et transférés le long d'une piste en boucle (9), ledit mécanisme comprenant un premier moyen d'enclenchement fixé au support et un second moyen d'enclenchement qui est fixe par rapport à la piste dans laquelle les premier et second moyens d'enclenchement s'enclenchent l'un sur l'autre lorsque le mécanisme est en cours d'utilisation pour provoquer ce retournement, caractérisé en ce que :
a) le premier moyen d'enclenchement comprend un corps (1) qui comporte un élément de plaque (3) fixé à un tel support (8) et quatre éléments de retournement (4) supportés rotatifs sur l'élément de plaque (3) en des positions placées à égales distances les unes des autres dans la direction de la circonférence, et en ce que
b) le second moyen d'enclenchement comprend au moins une came de retournement (2) comportant au moins une protubérance (5) formée sur une barre (9) constituant un chemin de roulement sur lequel les éléments de retournement (4) du corps (1) roulent pour guider les éléments de retournement (4) de façon à provoquer le retournement du corps (1), ainsi que des gorges (6) réalisées sur les côtés avant et arrière de la protubérance (5) dans la barre (9) constituant un chemin de roulement.

2. Mécanisme selon la revendication 1, caractérisé en ce que la barre (9) formant un chemin de roulement comporte deux cames de retournement.
